# EUROPEAN PATENT SPECIFICATION

(11) **EP 3 715 220 B1**
(45) Date of publication and mention of the grant of the patent: **29.11.2023**
(21) Application number: 20020121.8
(22) Date of filing: 12.03.2020
(51) Int. Cl.: B62D 12/00

(54) **COMBINED STEERING SYSTEM FOR ARTICULATED TRACTORS**
KOMBINIERTES LENKSYSTEM FÜR MITTELGELENK-TRAKTOREN
SYSTÈME DE DIRECTION COMBINÉ POUR TRACTEURS À ARTICULATION CENTRALE

(30) Priority: 26.03.2019 HU 1900091
(43) Date of publication of application: 30.09.2020
(73) Proprietor: Rátkai, István, 8124 Kálóz (HU)
(72) Inventor: RÁTKAI, István, H-8124 Kálóz (HU)
(74) Representative: Kiss, Janos Jozsef

(56) References cited:
- EP-A1- 2 777 965
- EP-A2- 2 058 439
- CN-A- 1 730 304
- DE-A1- 3 623 347
- FR-A1- 2 343 639
- FR-A1- 2 663 590
- JP-A- S58 164 481
- US-A- 4 215 874

## Description

The subject of the invention is a combined steering system for articulated tractors, with particular regard to their ability to tow on road.

Articulated steering is used on all-wheel-drive tractors. The front and rear axles of an articulated tractor are rigid while the front and rear wheels follow the same wheel track to allow for turning on a curved track. When turning, the wheels position themselves in the direction of the tangent of the turn circle. Unlike rigid-frame tractors, an articulated tractor is easy to steer in case of cultivating in a narrow line or in reverse. Although the diameter of its turning circle is relatively small, the tractor is not able to make sharp turns.

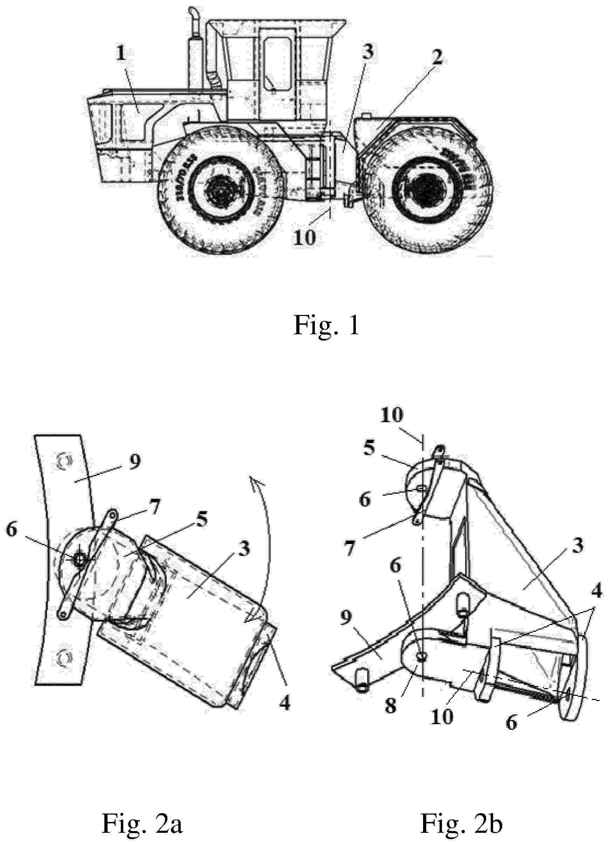

Figure 1 illustrates a classic articulated tractor consisting of three main frame sections. The front frame section **1** contains the engine, the transmission structural components, the cab and the front -not steered- wheels mounted on the rigid front axle. In the figure, the middle frame section **3** turning around the central pivots or centre pins located along the rotation axis **10** is attached to the rear frame section **2** to which machinery may be mounted. The wheels -also not steered- mounted on the rigid rear axle of the rear frame section **2** have the same diameter as the front wheels.

Figures 2a and 2b illustrate the known configuration of the middle frame section **3,** with parts connected to the front frame section **1** and the rear frame section **2.** An upper pivot plate **5** and a lower pivot plate **8** is attached to the middle frame section **3** which have pin holes **6** for connecting the lower and upper centre pivot pins in the direction of axis of rotation **10** of the horizontal rotation of the frame sections. The upper pivot plate **5** is directly connected by means of a centre pin to a counterpart formed on the front frame section **1,** and the lower pivot plate **8** is connected by means of a centre pin to crossmember **9** mounted on the front frame section **1.** The receiving part **7** of the articulation steering cylinders is mounted on the upper pivot plate **5.** The middle frame section **3** is attached to the rear frame section **2** with two lower fore-and-aft pivot plates **4** and pins passing through the pin holes **6** along the axis of rotation **10.** This arrangement enables the rear frame section **2** to rotate in a vertical plane, which is necessary to overcome the unevenness of the ground. Thus, turning with the articulation is possible in two orthogonal planes relative to the tractor frame structure and the ground: the allowed rotation of the rear frame section **2** is 35-40° in the horizontal ground plane and 10-15° in the vertical plane.

The diameter of the turning circle of the articulated tractor can be significantly reduced if the front wheel is steerable. In this case, a steered axle is used instead of a rigid front axle. In the case of tractors, stub-axle steering has become common, where the plane of the steered front wheels is usually rotated by hydraulic transmission to change the direction of the tractor. The wheels are connected to the frame structure by means of a rotatable stub axle; their angle of rotation is not uniform, which is achieved by means of a steering trapezoid.

Front-wheel-drive articulated tractors are known to the state of the art.

Patent document EP 1502839 A2 describes an articulated tractor in which the front wheels are steered by at least one actuator assembly coupled to the rear wheels. The actuator assembly comprises a pair of pivoting, double-acting hydraulic cylinders located on opposite sides of the frame; arms forming part of the front wheel hubs; an articulated synchronizing rod and assembly arranged between the arms. The arrangement is quite complicated and requires high maintenance.

Patent document US 4,802,545 A suggests a steering system for articulated vehicles such as tractors. The front wheels and the front frame section of the vehicle are rotated by controlled hydraulic cylinders. Pivoting is detected by sensors, while signals are received by a microprocessor control unit that controls the directional control valves of the actuating hydraulic system. In the hydraulic system, a solenoid-actuated hydraulic valve is used to drive the articulated steering to the normal position when the steering system is in the front frame section or wheel rotation steering mode.

Patent document US 4,565,257 suggests an articulated machine where the front wheels and the front frame section of the vehicle are each rotated by non-centrally built-in controlled hydraulic cylinders.

Patent document US 5,137,106 A describes a steering system for articulated tractors wherein the connecting parts of the front and rear frame section connected with a centre pin are steered into the desired direction by two hydraulic cylinders arranged symmetrically relative to the centre line of the tractor. A similar solution is presented by patent document US 7,694,772 B1.

DE 36 23 347 discloses the preamble of claim 1.

The disadvantage of articulated tractors is that they cannot be used for towing on roads due to their articulated body, which is prohibited by law. This disadvantage impairs the economic viability of the power-machine, since the tractor cannot be involved in road transport, which is closely linked to farming. The state of the art does not provide any hint whether the occasional and secure attachment of the articulating frame sections to one another eliminates the disadvantage, which is a real demand from operators.

The object of the present invention is to provide a combined steering system for articulated tractors which can be implemented by modifying an available articulated tractor with or without a front-wheel steering system and which provides independent front-wheel steering and articulation steering modes. In the front-wheel steering mode, the machine can legitimately tow on road, because the articulated frame sections are safely anchored to one another along the longitudinal axis of the machine. A further object of the invention is to provide a combined steering system in which the change of the operating mode can be controlled by a simple switching step.

The invention does not include the design of a steered front axle, which is a structural design known to the state of the art and which can be incorporated into the front frame section of an available tractor with rigid front axle-e.g. during the retrofit of the tractor.

With this objective in mind, our invention proposes a combined steering system for articulated tractors comprising an articulation steering mechanism and a front-wheel steering mechanism, where the steering system can be operated only in the articulation or only in the front-wheel steering mode. In the articulation steering mode, the front wheels cannot be steered; when turning, the front wheels and the rear wheels mounted on the rigid rear axle of the tractor follow the direction of tangent of the turning circle. In the front-wheel steering mode, the front wheels may be pivoted, the middle section of the tractor that is coupled to the rear frame section is attached to the front frame of the tractor by means of an articulation interlock that prevents pivoting in the horizontal plane. In this mode, the articulated tractor can tow a trailer or other trail on the road. The articulation and front-wheel steering mechanisms as well as the articulation interlocking mechanism are actuated by hydraulic cylinders.

The objectives of the invention are achieved by the steering system described in independent claim 1, the beneficial implementation of which are described in the dependent claims.

The invention is described in detail with reference to the enclosed drawings, in which
- Figure 1 is a side view of an articulated tractor known to the state of the art,
- Figure 2a is a top view of an articulation structure known to the state of the art,
- Figure 2b shows the structure in Figure 2a in a bottom view,
- Figure 3a shows an articulated steering position in top view;
- Figure 3b shows the top view of the front-wheel steering position with an interlocked articulation,
- Figure 4a shows an articulation interlock in the closed position,
- Figure 4b shows an articulation interlock in the open position,
- Figure 5a shows the middle frame section and the articulation interlock in side view,
- Figure 5b shows the same arrangement as in Figure 5a but in bottom view.
- Figure 6 is a flow diagram of the hydraulic control system of the combined steering system.

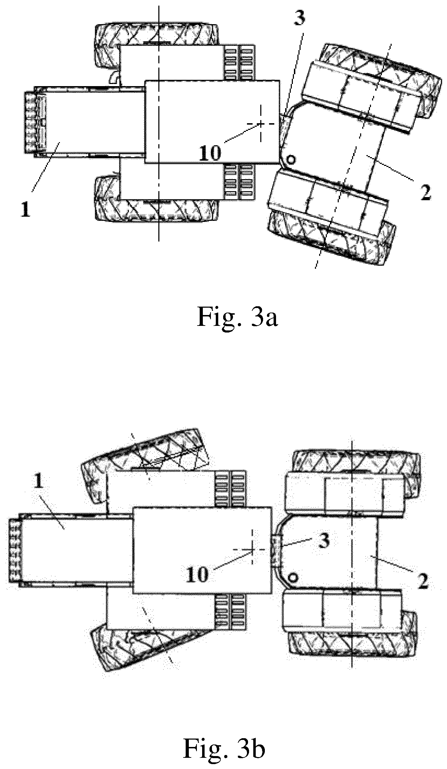

Figures 3a and 3b show a turning tractor equipped with the combined steering system as per the invention. Figure 3a shows that in case of the articulation steering, the front frame section **1** of the tractor and the middle frame section **3** connected to the rear frame section **2** are at an angle relative to one another that corresponds to the radius of the turning circle; both the front wheels and the rear wheels are in the base position, because the steering system does not allow the steering of the front wheels, and the rear wheels are not steerable. Using articulation steering, the tractor performs field work, towing and driving machinery.

Figure 3b shows the tractor in the road towing position with front-wheel steering, where the tractor is turned by steering the front wheels and the rear wheels are in the base position; the front frame section **1** of the tractor is rigidly connected to the rear frame section **2** and the middle frame section **3.** The possibility of pivoting the articulation between the front frame section **1** and the middle frame section **3** is excluded by an interlocking mechanism.

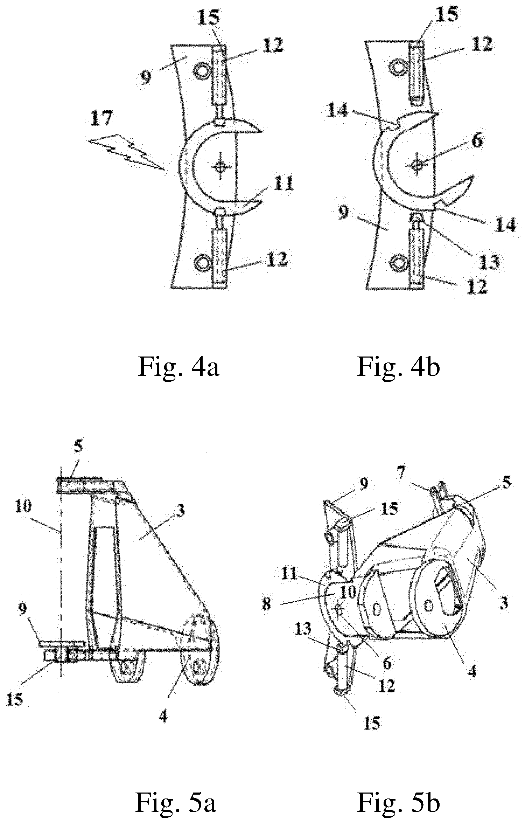

Figure 4a shows a closed articulation interlock and Figure 4b shows an open articulation interlock **17,** which comprises a circular articulation locking ring **11** with two interlock head seats **14** and two hydraulic interlock cylinders **12** each containing an interlock head **13.** The interlock heads **13** are mounted at the free end of the piston rods of the interlock cylinders **12,** preferably by means of a screw connection.

The shape of the interlock heads **13** fits the shape of the interlock seats **14,** in the closed position of the articulation interlock **17**the interlock heads **13** should sit in the interlock head seats **14** by shape fitting to avoid rapid wear and deformation of the structural parts or their breakage (in especially unfavourable cases).

Figures 5a and 5b illustrate the middle frame section **3** of the tractor with mounted articulation interlock **17.** With respect to the design of the middle frame section **3,** the known solution shown in Figures 2a and 2b is used as reference. The function of the articulation interlock **17** is to connect the front frame section **1** and the middle frame section **3** of the articulated tractor by means of a rigid connection that enables pivoting. Accordingly, the articulation locking ring **11** and the interlock cylinders **12** are connected to different frame sections, as follows.

The articulation locking ring **11** is preferably fixed to the lower pivot plate **8** of the middle frame section **3** by welding, and the interlock cylinders **12** are fixed by screw connection to the mounting elements **15** of the crossmember piece **9** that is preferably fixed by screw connection to the front frame section **1** of the articulated tractor. The mounting elements **15** are individual parts which are also fixed to the crossmember piece **9** by welding.

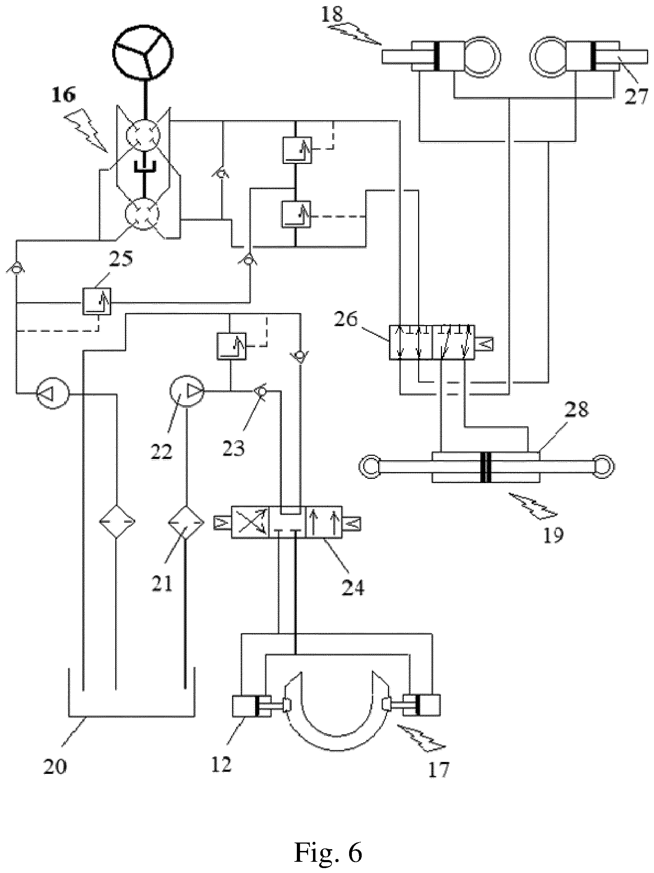

Figure 6 shows the layout of a circuit diagram of the hydraulic apparatus actuating the steering system of the present invention. The main units operated by the hydraulic apparatus are: steering gear **16,** articulation interlock **17,** articulation steering mechanism **18** and front-wheel steering mechanism **19.** Known elements of the hydraulic apparatus are: oil tank **20,** filter **21,** pump **22,** check valve **23,** electric 3-position 4/3 directional control valve **24,** pressure limiter **25,** electric push-button 6/2 directional control valve **26,** interlock cylinders **12,** articulation steering cylinders **27** and front-wheel steering cylinder **28.** The cylinders are double-acting hydraulic cylinders.

The operation of the interlock cylinders **12** of the articulation interlock **17** is controlled by the 4/3 directional control valve **24.** A flawless operation of the articulation interlock **17** requires that the front frame section **1** and middle frame section **3** of the tractor are exactly aligned so that the interlock cylinders **12** push smoothly the interlock heads **13** into the interlock head seats **14** of the articulation locking ring **11.** Therefore, at the crossmember piece **9** and at the articulation locking ring **11,** angle position sensors and limit switch must be placed and connected to the electrical system of the tractor to control the 4/3 directional control valve **24.**

To switch the steering mode, the hydraulic apparatus is equipped with a 6/2 directional selector control valve **26** controllable by a push-button enabled electric control device. Switching can be performed when the tractor is stationary, the gearbox is in neutral position, the articulation steering mechanism **18** and the front-wheel steering mechanism **19** are both in the neutral centre position and the push button of the 6/2 directional selector control valve **26** is pressed.

The combined steering system of the invention is capable of performing the tasks outlined in the objectives as it provides independent front-wheel steering and articulation steering modes for an articulated tractor equipped with a front steered axle, and by securely interlocking the articulated frame sections, allowing the tractor to perform lawful towing on roads.

## Claims

1. Combined steering system for articulated tractors comprising a steering gear (16), an articulated steering mechanism (18), a front-wheel steering mechanism (19) and a hydraulic apparatus for controlling an articulation steering mode or a front-wheel steering mode, wherein the combined steering system is provided by a hydraulic articulation interlock (17) open in the articulation steering mode and closed in the front-wheel steering mode, **characterized in that** the articulation interlock (17) has an articulation locking ring (11) with interlock head seats (14) and interlock cylinders (12) containing an interlock head (13).

2. Combined steering system according to Claim 1, **characterized in that** the articulation locking ring (11) is fixed to a lower pivot plate (8) of a middle frame section (3) of the articulated tractor.

3. Combined steering system according to any one of Claims 1 to 2, **characterized in that** the interlock heads (13) are mounted on the free end of the piston rods of the interlock cylinders (12).

4. Combined steering system according to any one of Claims 1 to 3, **characterized in that** the interlock cylinders (12) are connected to mounting elements (15) of a crossmember (9) fixed to a front frame section (1) of the articulated tractor.

5. Combined steering system according to any one of Claims 1 to 4, **characterized in that** the interlock heads (13) engage the interlock head seats (14) by shape fitting in the closed position of the articulation interlock (17).

6. Combined steering system according to any one of Claims 1 to 5, **characterized in that** a 6/2 directional selector control valve (26) controllable by a control device is built in the hydraulic apparatus to change the steering mode.

7. Combined steering system according to any one of Claims 1 to 6, **characterized in that** the operation of the articulation interlock (17) is controlled by a 4/3 directional control valve (24).

8. Combined steering system according to any one of Claims 1 to 7, **characterized in that** cylinders (27, 28) used for the steering modes and the interlock cylinders (12) are double-acting hydraulic cylinders.

9. Combined steering system according to any one of Claims 2 to 8, **characterized in that** an upper pivot plate (5) is attached to the middle frame section (3), and the lower and upper pivot plates (8, 5) of the middle frame section (3) of the articulated tractor are connected to the front frame section (1) of the articulated tractor by pins located in pin holes (6) enabling pivoting in the horizontal plane.

## Patentansprüche

1. Kombiniertes Lenksystem für knickgelenkte Traktoren, bestehend aus einem Lenkgetriebe (16), einen Knicklenkmechanismus (18), einer Vorderradlenkung (19) und einer hydraulischen Vorrichtung zum Steuern eines Knicklenk- oder Vorderradlenkmodus, wobei das kombinierte Lenksystem mit einer im Knicklenkmodus offenen, im Vorderradlenkmodus geschlossenen hydraulischen Knicksperre (17) ausgestattet ist, **dadurch gekennzeichnet, dass** die Knicksperre (17) einen Knickverriegelungsring (11) mit Verriegelungskopfpfannen (14) und Verriegelungszylindern (12), die einen Verriegelungskopf (13) enthalten, aufweist.

2. Kombiniertes Lenksystem nach Anspruch 1, **dadurch gekennzeichnet, dass** der Knickverriegelungsring (11) an einem unteren Drehschemel (8) eines mittleren Rahmenteils (3) des knickgelenkten Traktors befestigt ist.

3. Kombiniertes Lenksystem nach einem der Ansprüche 1 oder 2, **dadurch gekennzeichnet, dass** die Verriegelungsköpfe (13) am freien Ende der Kolbenstangen der Verriegelungszylinder (12) angebracht sind.

4. Kombiniertes Lenksystem nach einem der Ansprüche 1 bis 3, **dadurch gekennzeichnet, dass** die Verriegelungszylinder (12) mit Befestigungselementen (15) eines Querträgers (9) verbunden sind, der an einem vorderen Rahmenteil (1) des knickgelenkten Traktors befestigt ist.

5. Kombiniertes Lenksystem nach einem der Ansprüche 1 bis 4, **dadurch gekennzeichnet, dass** die Verriegelungsköpfe (13) in geschlossener Position der Knicksperre (17) formschlüssig mit den Verriegelungskopfpfannen (14) verbunden sind.

6. Kombiniertes Lenksystem nach einem der Ansprüche 1 bis 5, **dadurch gekennzeichnet, dass** zum Wechsel des Lenkmodus ein mit einem Bedienungselement steuerbares Selektions-6/2-Mehrwegeventil (26) in die hydraulische Vorrichtung eingebaut ist.

7. Kombiniertes Lenksystem nach einem der Ansprüche 1 bis 6, **dadurch gekennzeichnet, dass** die Funktion der Knicksperre (17) von einem 4/3-Wegeventil (24) gesteuert wird.

8. Kombiniertes Lenksystem nach einem der Ansprüche 1 bis 7, **dadurch gekennzeichnet, dass** die für die Lenkmodi verwendeten Zylinder (27/28) und die Verriegelungszylinder (12) doppelwirkende Hydraulikzylinder sind.

9. Kombiniertes Lenksystem nach einem der Ansprüche 1 bis 8, **dadurch gekennzeichnet, dass** ein oberer Drehschemel (5) an den mittleren Rahmenteil (3) angeschlossen ist, und die unteren und oberen Drehschemel (8, 5) des mittleren Rahmenteils (3) des knickgelenkten Traktors mit dem vorderen Rahmenteil (1) des knickgelenkten Traktors durch in Stiftlöchern (6) befindliche Stifte verbunden sind und ein Drehen in horizontaler Ebene ermöglichen.

## Revendications

1. Système de direction combiné pour tracteurs articulés comprenant un mécanisme de direction (16), un mécanisme de direction d'articulation (18), un mécanisme de direction des roues avant (19) et un appareil hydraulique pour commander un mode de direction d'articulation ou un mode de direction des roues avant, dans lequel le système de direction combiné est assuré par un verrouillage d'articulation (17) hydraulique ouvert dans le mode de direction d'articulation et fermé dans le mode de direction des roues avant, **caractérisé en ce que** le verrouillage d'articulation (17) comporte une bague de verrouillage d'articulation (11) pourvue de sièges de tête de verrouillage (14) et des vérins de verrouillage (12) contenant une tête de verrouillage (13).

2. Système de direction combiné selon la revendication 1, **caractérisé en ce que** la bague de verrouillage d'articulation (11) est fixée à une plaque inférieure de pivotement (8) d'une section médiane de châssis (3) du tracteur articulé.

3. Système de direction combiné selon l'une quelconque des revendications 1 à 2, **caractérisé en ce que** les têtes deverrouillage (13) sont montées sur l'extrémité libre des tiges de piston des vérins de verrouillage (12).

4. Système de direction combiné selon l'une quelconque des revendications 1 à 3, **caractérisé en ce que** les vérins de verrouillage (12) sont reliés à des éléments de montage (15) d'une traverse (9) fixée à une section avant de châssis (1) du tracteur articulé.

5. Système de direction combiné selon l'une quelconque des revendications 1 à 4, **caractérisé en ce que** les têtes de verrouillage (13) s'engagent dans les sièges de tête de verrouillage (14) par emboîtement de forme en position fermée du verrouillage d'articulation (17).

6. Système de direction combiné selon l'une quelconque des revendications 1 à 5, **caractérisé en ce qu'**une valve directionnelle 6/2 (26) commandable par un dispositif de commande est intégrée dans l'appareil hydraulique pour changer le mode de direction.

7. Système de direction combiné selon l'une quelconque des revendications 1 à 6, **caractérisé en ce que** le fonctionnement du verrouillage d'articulation (17) est commandé par une valve directionnelle 4/3 (24).

8. Système de direction combiné selon l'une quelconque des revendications 1 à 7, **caractérisé en ce que** les vérins (27, 28) utilisés pour les modes de direction et les vérins de verrouillage (12) sont des vérins hydrauliques à double effet.

9. Système de direction combiné selon l'une quelconque des revendications 2 à 8, **caractérisé en ce qu'**une plaque de pivotement supérieure (5) est fixée à la section médiane de châssis (3), et les plaques de pivotement inférieure et supérieure (8, 5) de la section médiane de châssis (3) du tracteur articulé sont reliées à la section avant de châssis (1) du tracteur articulé par des tourillons situés dans des trous de tourillon (6) permettant le pivotement dans le plan horizontal.
